# EUROPEAN PATENT APPLICATION

(11) **EP 4 741 890 A1**
(43) Date of publication of application: **13.05.2026**
(21) Application number: 24836013.3
(22) Date of filing: 01.07.2024
(51) Int. Cl.: G02B 5/26, C09C 1/62, C09C 3/10, C09D 7/20, C09D 7/45, C09D 7/61, C09D 17/00, G02B 5/08

(54) **VISIBLE/INFRARED SEPARATION FILM AND METHOD FOR MANUFACTURING SAME**

(30) Priority: 04.07.2023 JP 2023110183; 04.07.2023 JP 2023110185
(71) Applicant: Minebea AccessSolutions Inc., Miyazaki-shi, Miyazaki 880-0293 (JP)
(72) Inventor: MATSUMOTO Nagisa, Miyazaki-shi, Miyazaki 880-0293 (JP); KUWAHARA Takeshi, Miyazaki-shi, Miyazaki 880-0293 (JP); TSUCHIDA Nami, Miyazaki-shi, Miyazaki 880-0293 (JP)
(74) Representative: Ipsilon
(86) International application number: PCT/JP2024/023771
(87) International publication number: WO 2025/009500

(57) **Abstract**

A visible/infrared separation film includes aggregates in each of which metal nanoparticles each having a major axis of 25 nm or less are aggregated, wherein a distance between surfaces of the metal nanoparticles in the aggregate is 2 nm or less, wherein a size of the aggregate is 50 nm or less, wherein the aggregates are spaced apart from each other at intervals of 5 nm or more, and wherein a film thickness is 120 nm or less.

## Description

### TECHNICAL FIELD

The present invention relates to a visible/infrared separation film that reflects visible light and transmits infrared light and a method for manufacturing the same.

Priority is claimed on Japanese Patent Application No. 2023-110183, filed July 4, 2023 and Japanese Patent Application No. 2023-110185, filed July 4, 2023, the contents of which are incorporated herein by reference.

### BACKGROUND ART

In the related art, in a case in which visible light and infrared light are separated from each other, a dielectric multilayer film that reflects the visible light out of incident light while transmitting infrared light out of the incident light has sometimes been used. The dielectric multilayer film is formed by alternately stacking two types of dielectrics with different refractive indices. Such a dielectric multilayer film specifically reflects only the visible light by exhibiting an ideal multilayer thin film interference phenomenon seen in the skin of fish such as a hairtail in nature while allowing the rest to be transmitted due to the dielectric properties, thereby performing visible/infrared separation.

A commonly known example is a so-called cold mirror, as described in Patent Document 1, which is made by precisely stacking generally 20 or more thin film layers on a substrate by sputtering or the like. The cold mirror is used in an optical filter, particularly, a projector or the like, to remove infrared rays from a light source. In addition, as shown in Patent Document 2, the cold mirror is used as a reflector mirror in a head-up display (HUD) to cut out infrared rays from sunlight entering from the outside and prevent heating. Furthermore, the cold mirror separates the sunlight into visible light and infrared light and is used as the core of a system that uses the visible light to generate electricity and the infrared light as a heat source, thereby making it possible to utilize sunlight with high efficiency.

In addition, recently, a film that is composed of a multilayer film in which approximately 1000 layers of resins with slightly different refractive indices are alternately stacked and that exhibits a metallic appearance has also become known. Such a film is used in automobile emblems that are transmissive to millimeter-wave radar, taking advantage of the appearance and radio wave transmitting properties thereof and is used in decorative materials that cover the infrared ray receiving portions of remote controls for home appliances, taking advantage of the infrared ray transmitting properties thereof.

### Citation List

### Patent Document

Patent Document 1: Japanese Unexamined Patent Application, First Publication No. 2006-259124
Patent Document 2: Japanese Patent No. 6577342

### SUMMARY OF INVENTION

### Technical Problem

In the cold mirror of the related art, the exhibition principle of the appearance is structural color, and thus the cold mirror is made by determining the film thickness of each layer in nanometer units using an optical calculation simulation to specifically reflect only the visible light with a smaller number of layers and precisely reproducing the determined film thickness by sputtering or the like. However, since a thin film having a total of 20 or more layers is formed by precisely sputtering while changing the components thereof, ultimately to have a film thickness of 1 micrometer, there is a problem that the manufacturing process takes a long time and is very costly. In addition, due to limitations in film-forming equipment, it is difficult to make a film large in area, and there is also a problem that the degree of freedom in the shape of the substrate is low.

An aspect of the present invention has been made in view of the above circumstances, and one of objects of the present invention is to provide a visible/infrared separation film that can be made large in area and that allows for a high degree of freedom in a shape of a substrate.

Another aspect of the present invention have been made in view of the above circumstances, and one of objects of the present invention is to provide a method for manufacturing a visible/infrared separation film that enables easy manufacturing without using a thin film manufacturing technology such as a sputtering method.

### Solution to Problem

To solve the above problems, the present invention employs the following configuration.

According to an aspect of the present invention, there is provided a visible/infrared separation film including aggregates in each of which metal nanoparticles each having a major axis of 25 nm or less are aggregated,
wherein a distance between surfaces of the metal nanoparticles in the aggregate is 2 nm or less,
wherein a size of the aggregate is 50 nm or less,
wherein the aggregates are spaced apart from each other at intervals of 5 nm or more, and
wherein a film thickness is 120 nm or less.

According to another aspect of the present invention, there is provided a method for manufacturing a visible/infrared separation film, including: a preparation step of dispersing at least one silver compound selected from silver oxide and silver carbonate and a polymer dispersant in an alcohol solvent, irradiating the alcohol solvent with ultrasonic waves to disperse the silver compound, and then leaving the alcohol solvent in a dark place to prepare a coating liquid; and a coating film formation step of coating a surface of a substrate with the coating liquid obtained in the preparation step. Advantageous Effects of Invention

According to an aspect of the present invention, it is possible to provide a visible/infrared separation film that can be made large in area and that allows for a high degree of freedom in a shape of a substrate.

According to another aspect of the present invention, it is possible to provide a method for manufacturing a visible/infrared separation film that enables easy manufacturing without using a thin film manufacturing technology such as a sputtering method.

### BRIEF DESCRIPTION OF DRAWINGS

[FIG. 1] A schematic cross-sectional view illustrating a configuration of a visible/infrared separation member having a visible/infrared separation film according to an embodiment of the present invention.
[FIG. 2] A schematic cross-sectional view of a main part of the visible/infrared separation member according to the embodiment of the present invention.
[FIG. 3] A schematic view illustrating an example of a structure of the visible/infrared separation film according to the embodiment of the present invention.
[FIG. 4] A schematic view illustrating another example of the structure of the visible/infrared separation film according to the embodiment of the present invention.

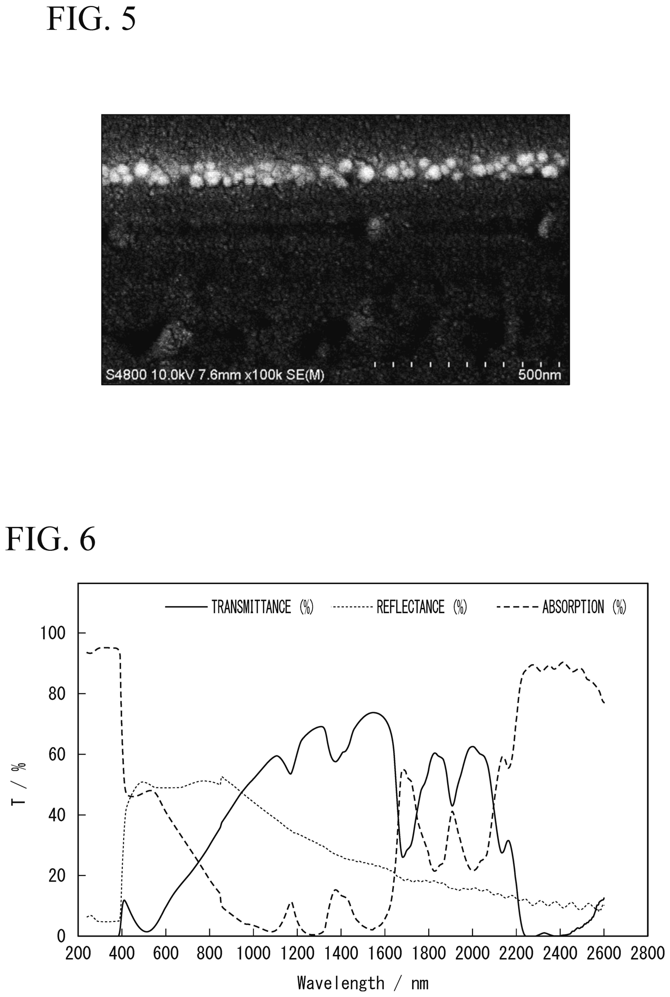

[FIG. 5] A cross-sectional SEM photograph showing a visible/infrared separation film of Example 1.
[FIG. 6] A spectral diagram showing a relationship between a reflectance and a transmittance and a wavelength of incident light of Example 1.

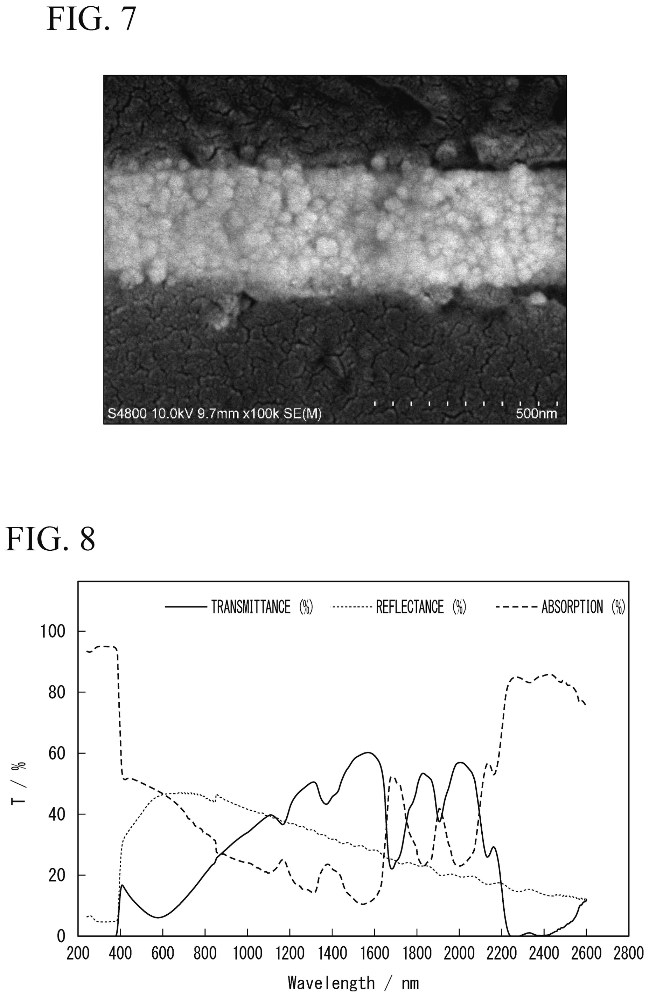

[FIG. 7] A cross-sectional SEM photograph showing a visible/infrared separation film of Comparative Example 1.
[FIG. 8] A spectral diagram showing a relationship between a reflectance and a transmittance and a wavelength of incident light of Comparative Example 1.

### DESCRIPTION OF EMBODIMENTS

From the perspective of condensed matter physics, a material that realizes a function of reflecting visible light while transmitting infrared light does not basically exist. In other words, in order to obtain metal-like reflection of visible light, according to the Drude-Sommerfeld model, the existence of free electrons is a prerequisite and at the same time, electrons can move freely, and thus it is not possible to achieve reflection only in a specific wavelength band.

For this reason, all of the prior art technologies achieve visible-infrared separation by providing specific reflection to visible light through the realization of structural color using a dielectric multilayer film. However, there are problems with the structural color produced by the dielectric multilayer film. First, it is difficult to manufacture the multilayer film because the multilayer film is optically designed to a high degree and a film thickness of the multilayer film is precisely controlled on the order of nanometers. In addition, secondly, such a multilayer film has limitations such as processing to a large area and the influence of the angle of incidence.

Therefore, the present inventors have conducted extensive research into the above-described problems.

The reason why both visible light reflection and infrared light transmission are not achieved is that there is no limitation on the movement of free electrons. Therefore, when free electrons can be physically confined in a nano-sized region, it is anticipated that the confined free electrons will be able to follow short-wavelength light (electromagnetic waves) and thus will behave as free electrons, but the confined free electrons will not be able to behave as free electrons for long-wavelength light (electromagnetic waves) due to the physical confinement and thus will be able to transmit electromagnetic waves, which is thought to be realizable.

The condition for realizing this is that "the structure contains metal nanoparticles that are independent of each other." However, it is not sufficient for independent metal nanoparticles simply to be contained. That is, the metal nanoparticles have localized surface plasmon resonance (hereinafter referred to as LSPR), and the absorption and reflection caused by the resonance of free electrons due to this are mixed together, and thus the desired effect cannot be obtained.

Therefore, it is found that even nanoparticles with LSPR can achieve both the visible light reflection and the infrared light transmission by utilizing a newly discovered "phenomenon in which electrons pass between nanoparticles and behave freely in some degree," which will be described below.

In the related art, basic and applied research on metal nanoparticles has been premised on interest in LSPR which can confine light in a nano-sized region and be used as a trigger for enhancement or energy conversion. For this reason, the research does not take into account the transfer and movement of electrons due to tunneling between nanoparticles and is based on simulations using a finite difference time domain method (FDTD method) which considers only the behavior inside the independent nanoparticles. It is known that a small amount of electron leakage (hereafter referred to as spill-out) occurs, but the research has focused on samples in which a sufficient interparticle distance is maintained using a dispersant (ligand) such that the leakage can be ignored to avoid discrepancies with the simulations.

Meanwhile, as a result of a detailed investigation into the behavior of a stacked film of a silver nanoparticle which is a type of metal nanoparticle, in which the interparticle distance is sufficiently close (approximately 2 nm or less) due to the selection of a dispersant, a phenomenon that cannot be explained by LSPR and cannot be explained without assuming that electrons pass between the nanoparticles and "behave as if the electrons are free electrons" is found. In other words, it is found that electrons do not simply spill out but behave as if the electrons have formed new bands between particles.

On the basis of this discovery, it is found that by creating a state in which electrons can tunnel between a plurality of metal nanoparticles in the film, the same effect as amorphous nanoparticles can be obtained.

To simultaneously realize reflection of visible light and transmission of infrared light, it is necessary for metal nanoparticles with a major axis of 25 nm or less to be present independently in the film. In the related art, the tunneling between particles has not been taken into consideration in a functional film containing metal nanoparticles, but a phenomenon that cannot be realized without assuming the tunneling has been found. When metal nanoparticles are close enough to each other, the tunneling occurs, allowing electrons to move freely across the plurality of nanoparticles, allowing the electrons to behave like a pseudo-"amorphous and sufficiently small metal nanostructure."

The problem here occurs in a case in which the metal nanostructure is larger than a certain size. When the metal nanostructure is larger than a certain size, the metal nanostructure responds to long-wavelength light (electromagnetic waves) like a metal, significantly impeding the transmission of light (electromagnetic waves) in an infrared region. To prevent this, the fact that the tunneling between metal nanoparticles decreases exponentially with the distance is used, and a measure to make aggregates of compactly aggregated metal nanoparticles independent while maintaining a minimum distance between the aggregates is devised. In the related art, the requirement of making the aggregates sufficiently independent has not been satisfied, resulting in reflection and absorption extending into the infrared region, making it impossible to obtain an effective visible/infrared separation film.

Hereinafter, a visible/infrared separation film and a method for manufacturing the same according to an embodiment of the present invention will be described.

In the present embodiment, visible light refers to light with a wavelength in the range of 380 to 750 nm. Infrared light refers to light with a wavelength in the range of 850 to 1600 nm. Light with a wavelength of 1600 nm or more is excluded because it is significantly affected by the absorption of the transparent resin substrate.

The visible/infrared separation film of the present embodiment includes aggregates in each of which metal nanoparticles each having a major axis of 25 nm or less are aggregated, wherein a distance between surfaces of the metal nanoparticles in the aggregate is 2 nm or less, wherein a size of the aggregate is 50 nm or less, wherein the aggregates are spaced apart from each other at intervals of 5 nm or more, and wherein a film thickness is 120 nm or less.

The visible/infrared separation film of the present embodiment will be described below in order.

The visible/infrared separation film may be stacked on a primary layer formed on a substrate. The visible/infrared separation film is a thin film with a film thickness of 120 nm or less and is thus susceptible to the influence of unevenness of the substrate. For this reason, the primary layer may be provided to smooth the surface of the substrate. In addition, a clear layer may be stacked on the visible/infrared separation film. The visible/infrared separation film contains silver nanoparticles and is easily damaged, and thus the clear layer may be provided to protect the visible/infrared separation film.

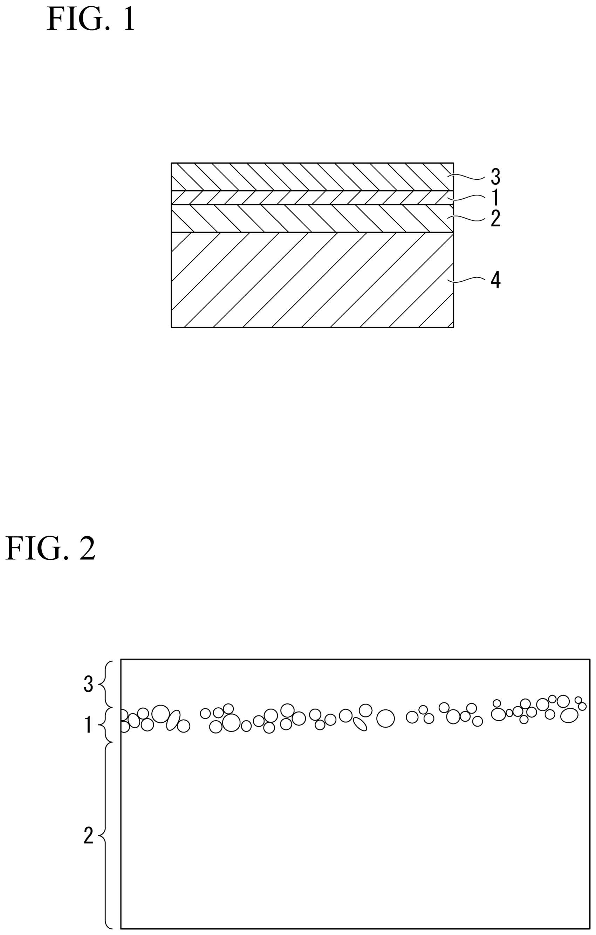

That is, as shown in FIG. 1, a visible/infrared separation member 5 may be provided with a substrate 1, a primary layer 2 formed on the substrate 1, a visible/infrared separation film 3 formed on the primary layer 2, and a clear layer 4 formed on the visible/infrared separation film 3. The primer layer 2 is formed by applying, for example, an acrylic urethane primer paint. In addition, the clear layer 4 is formed by applying, for example, an acrylic urethane clear paint.

The substrate 1 may be disposed on a light incidence surface side of the visible/infrared separation film 3 or may be disposed on a light emission surface side of the visible and infrared separating film 3. In a case in which the substrate 1 is disposed on the light incidence side, it is preferable that the substrate 1 have a transmittance of 90% or more for both the visible light and the infrared light. This is to prevent the visible light and the infrared light included in the incident light from being absorbed by the substrate 1 before the incident light is transmitted through the visible/infrared separation film 3. Examples of such a substrate 1 include polymethyl methacrylate, polycarbonate, acrylic urethane, and the like. On the other hand, in a case in which the substrate 1 is disposed on the light emission side, it is preferable that the substrate 1 have a transmittance of 90% or more for the infrared light. This is to prevent the infrared light included in the light emitted from the visible/infrared separation film 3 from being absorbed by the substrate. Examples of such a substrate 1 include polymethyl methacrylate, polycarbonate, acrylic urethane, and the like.

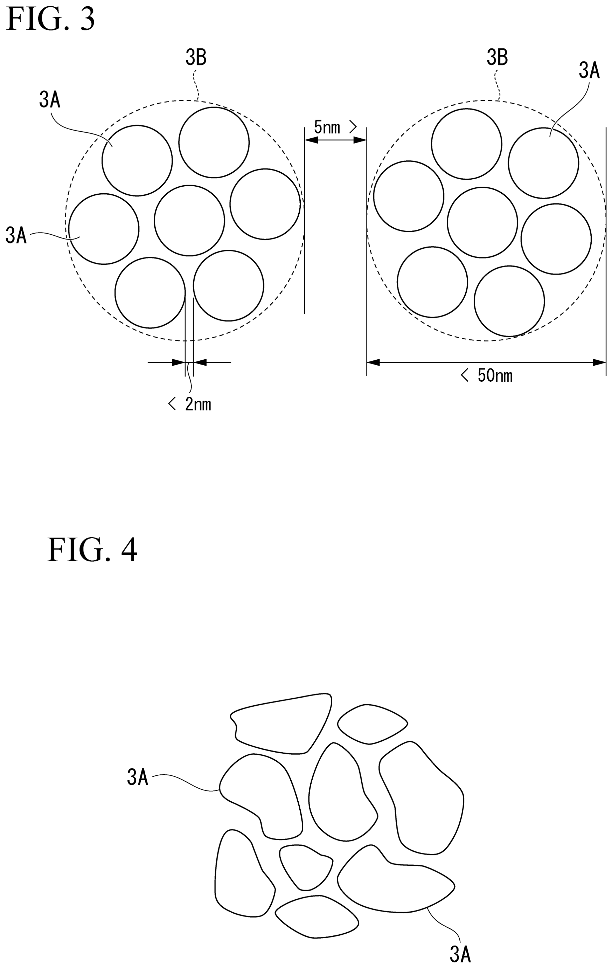

As shown in FIGS. 2 and 3, the visible/infrared separation film 3 includes aggregates 3B in each of which metal nanoparticles 3A each having a major axis of 25 nm or less are aggregated. The aggregate 3B is formed by aggregating at least two or more metal nanoparticles 3A. Within the aggregate 3B, two or more metal nanoparticles 3A are close to each other with a distance between the surfaces of 2 nm or less. In addition, the aggregates 3B are spaced apart from each other at a distance between the surfaces of 5 nm or more. In this way, by measuring the distance between the surfaces, it is possible to identify the aggregates 3B. The distance between the surfaces of the metal nanoparticles 3A is the shortest distance between the particle surfaces of the metal nanoparticles 3A. The distance between the surfaces of the aggregates 3B is the shortest distance between the surfaces of the aggregates 3B.

The visible/infrared separation film 3 contains a resin composed of a polymer dispersant in addition to the metal nanoparticles 3A.

The content of the metal nanoparticles 3A contained in the visible/infrared separation film 3 is preferably 35% to 50% in terms of volume filling percentage (%). The remaining portion may be a resin (polymer dispersant). By setting the content of the metal nanoparticles 3A in the range of 35% to 50%, it is possible to reflect the visible light out of the incident light and transmit the infrared light. When the content of the metal nanoparticles 3A is 50% or more, there is a concern that the distance between the surfaces of the aggregates cannot be made 5 nm or more. When the content of the metal nanoparticles 3A is less than 35%, the proportion of particles is too small to maintain a metallic appearance.

When the metal nanoparticles 3A are composed of Ag (silver), the shape of the metal nanoparticles is preferably any one of a sphere, a disk, a rod, and a rectangle. In addition, it is preferable that the metal nanoparticles have the same shape. FIG. 3 shows a case in which the metal nanoparticles 3A are spherical and the metal nanoparticles 3A have the same shape. However, in a case in which the metal nanoparticles are In (indium), the shape of the metal nanoparticles is preferably a shape that is not any one of a sphere, a disk, a rod, and a rectangle, as shown in FIG. 4. That is, the shape of the metal nanoparticles is preferably an irregular amorphous shape, as shown in FIG. 4. The amorphous silver nanoparticles have a dark appearance and block the reflection, as expected from silver halide photography. Therefore, this can be avoided by using the silver nanoparticles with the same shape. On the other hand, the indium nanoparticles can be obtained by vapor deposition or sputtering, and the indium nanoparticles have an amorphous shape, but the indium nanoparticles have a silvery white appearance, and thus there is no problem.

The major axis of each of the metal nanoparticles 3A is preferably 25 nm or less. When the major axis is 25 nm or less, it is possible to transmit the infrared light. The major axis of the metal nanoparticle 3A is the maximum diameter of the metal nanoparticle 3A when observed with an SEM or TEM.

As described above, the visible/infrared separation film 3 contains a resin as well as the metal nanoparticles 3A. The resin is present between the metal nanoparticles 3A and between the aggregates 3B, separates the metal nanoparticles 3A from each other, and contributes to making the aggregated metal nanoparticles independent even after the metal nanoparticles 3A are aggregated, thereby maintaining the aggregated metal nanoparticles as the aggregate 3B. For this reason, although the metal nanoparticles 3A are the aggregate, the metal nanoparticles 3A are not in contact with each other, and the free movement of electrons is restricted.

The distance between the surfaces of the metal nanoparticles 3A in the aggregate 3B needs to be 2 nm or less. As a result, it is possible to cause a phenomenon in which free electrons pass between the nanoparticles and behave freely in some degree and to reflect the visible light out of the incident light. In addition, it is possible to transmit the infrared light. The distance between the surfaces of the metal nanoparticles 3A only has to be greater than 0 nm.

In addition, the distance between the surfaces of the aggregates 3B is preferably 5 nm or more. When the distance between the surfaces of the metal nanoparticle aggregates 3B is less than 5 nm, the infrared light will be reflected, which is not preferable. The distance between the surfaces of the aggregates 3B may be, for example, 20 nm or less or 10 nm or less.

In addition, in the aggregates included in the visible/infrared separation film, aggregates having an aspect ratio (major axis/minor axis), which is a ratio of a major axis to a minor axis, in a range of 1 to 2 are preferably 70% or more in a proportion by number. Preferably, the percentage may be 90% or more. As a result, long nanoparticles or clusters that may respond to the infrared light are eliminated as many as possible, thereby suppressing reflection and absorption in the infrared region.

The thickness of the visible/infrared separation film is set to 120 nm or less. The thickness of the visible/infrared separation film may be 100 nm or less. In addition, the thickness of the visible/infrared separation film may be 50 nm or more or may be 30 nm or more. By setting the thickness of the visible/infrared separation film to 120 nm or less, it is possible to reflect the visible light out of the incident light and transmit the infrared light.

The metal nanoparticles are preferably composed of either silver (Ag) or indium (In). Particularly preferably, the metal nanoparticles are composed of silver (Ag).

In a method for measuring the major axis of the metal nanoparticle, a cross section is cut out using a microtome or the like, and measurement is performed using an SEM. The magnification is set to 100,000 to 150,000 times, and 10 nanoparticles are randomly selected within the observation field of view, and the measurement is performed. The measurement is performed in five different fields of view, and the average value is taken as the major axis.

In a method for measuring the distance between the surfaces of the metal nanoparticles, a cross section is cut out using a microtome or the like, and measurement is performed using an SEM. The magnification is set to 100,000 to 150,000 times, and 10 particle intervals are randomly selected from the cluster of the nanoparticles within the observation field of view and the measurement is performed. The measurement is performed in five different fields of view, and the average value is taken as a surface distance.

In a method for measuring the aspect ratio of the metal nanoparticle, a cross section is cut out using a microtome or the like, and measurement is performed using an SEM.

In a method for measuring the proportion by number of the metal nanoparticles having an aspect ratio (major axis/minor axis) in the range of 1 to 2, a cross section is cut out using a microtome or the like, observation is perform using an SEM, and the aspect ratios of all nanoparticles present within the field of view are calculated. The measurement is performed in five different fields of view, and the proportion is calculated from the average thereof.

Preferably, the polymer dispersant has a styrene-maleic anhydride resin structure, and some of the maleic anhydride is modified with a polyalkylene glycol having a terminal hydroxyl group or a polyalkylene glycol having a terminal amino group. Preferably, the polyalkylene glycol has a molar ratio of polyethylene glycol chains to polypropylene glycol chains of 6/4 to 8/1 and a molecular weight of 500 to 3,000. By using a polymer dispersant having such a configuration, it is possible to keep the metal nanoparticles stably dispersed in the visible/infrared separation film.

In addition, the polymer dispersant preferably has an acid value of 150 or less. As a result, it is possible to suppress oxidation of the silver nanoparticles.

Next, a method for manufacturing a visible/infrared separation film of the present embodiment will be described. The manufacturing method of the present embodiment enables manufacturing by forming a single stacked film on a substrate, instead of stacking a plurality of thin films with different refractive indices alternately as in the related art.

That is, the method for manufacturing a visible/infrared separation film of the present embodiment includes a preparation step of preparing a coating liquid and a coating film formation step of coating a surface of a substrate with the coating liquid by spraying the coating liquid, and then drying the coating liquid. Hereinafter, each step will be described.

In the preparation step, at least one silver compound selected from silver oxide and silver carbonate and a polymer dispersant are dispersed in an alcohol solvent, the alcohol solvent is irradiated with ultrasonic waves to reduce and disperse the silver compound, and then the alcohol solvent is left in a dark place for three to six months to prepare a coating liquid. When the coating liquid is applied immediately after reduction and dispersion, aggregates cannot be formed in the coating film. By leaving the prepared liquid in a dark place for three to six months, the silver nanoparticles naturally aggregate to form aggregates of 50 nm or less. "Leaving in a dark place" means leaving in a state in which no light is incident on the coating liquid.

The polymer dispersant may be any of those described above. The polymer dispersant having a styrene-maleic acid copolymer structure and the polymer dispersant in which some of the maleic anhydride is modified with a polyalkylene glycol having a terminal hydroxyl group or a polyalkylene glycol having a terminal amino group are already commercially available. Examples of the styrene-maleic acid copolymer used as a base resin include SMA (registered trademark) Base Resin 1000, 2000, 3000, SMA Ester Resin 1440, 2625 (all manufactured by Cray Valley USA, LLC), Alastar 700 (manufactured by Arakawa Chemical), and the like. The acid value of these base resins having an SMA structure is as high as 175 to 500. In addition, Disperbyk 190 and 2015 (non-volatile content 40%, acid value 10, manufactured by BYK Corporation) have a styrene-maleic anhydride resin structure, some of the maleic anhydride is modified with a polyalkylene glycol or the like having a terminal hydroxyl group, and the acid value of the non-volatile content is 25 in both cases.

As described above, the commercially available polymer dispersants include those with high and low acid values, but the acid value is fixed at a predetermined value. Therefore, by using SMA Base Resin 1000 which is a polymer dispersant having a styrene-maleic acid copolymer structure, and modifying some of the maleic anhydride in the styrene-maleic acid copolymer structure with a polyalkylene glycol having a terminal hydroxyl group or a polyalkylene glycol having a terminal amino group, the acid value only has to be adjusted to 150 or less.

In addition, the alcohol solvent is at least one selected from the group consisting of methanol, ethanol, 1-propanol, 2-propanol, 1-butanol, 2-methyl-1-propanol, and 1-methoxy-2-propanol.

The at least one silver compound selected from the silver oxide and the silver carbonate is not particularly limited as long as it is in powder form.

An amount of the polymer dispersant added to the silver compound is 2% to 25% in term of mass percentage of a nonvolatile content. In addition, a concentration of the silver compound in an alcohol solution is set to 5% to 40% by mass.

When the silver oxide or the silver carbonate is added to the alcoholic solvent in which the polymeric dispersant has been dissolved, a heterogeneous solid-liquid two-phase alcoholic solution in which the silver oxide or silver carbonate is dispersed is obtained. When this alcohol solution is irradiated with ultrasonic waves, bubbles (cavitation) are generated in the solution. As this cavitation is generated and collapsed, a high-temperature local reaction field is generated in the solution, which helps to generate a radical and thereby promotes a chemical reaction thereof. That is, even without adding a separate reducing agent, a decomposition and reduction reaction occurs in the silver oxide or the silver carbonate to generate silver as a metal, which is then precipitated in the form of silver nanoparticles. The reaction formula is shown below.

Ag₂O → 2Ag + O₂↑

Ag₂CO₃ → 2Ag + 1/2O₂↑ + CO₂↑

As shown in the above reaction formula, oxygen (in the case of the silver oxide) or oxygen and carbon dioxide (in the case of the silver carbonate) are generated as byproducts, but these are volatile, the alcohol solvent is also volatile, and all of these substances are non-corrosive components. For this reason, by performing the coating film formation step, it is possible to easily manufacture the visible/infrared separation film composed of the silver nanoparticles and the polymer dispersant.

The alcohol solution after the silver compound has been dispersed by ultrasonic wave irradiation is further left in the dark place. As a result, aggregation of the silver nanoparticles is promoted, making it possible for the metal nanoparticles in the visible/infrared separation film to aggregate at a distance between surfaces of 2 nm or less and form aggregates each having a size of 50 nm or less. There is no limit to the time period for which the alcohol solution is left as long as the aggregates each having a size of 50 nm or less can be formed, but it is preferable to leave the alcohol solution for, for example, three months or more. There is no particular upper limit to the time period for which the alcohol solution is left, but it may be, for example, six months or less. The start of the time period for which the alcohol solution is left is the end of the ultrasonic wave irradiation.

Next, in the coating film formation step, the coating liquid obtained in the preparation step is applied to the surface of the substrate by spraying and then drying the coating liquid, for example. The drying may be performed in an atmosphere of, for example, 5 to 80 °C.

A common sprayer only has to be used as a means for spraying the coating liquid. There are no particular limitations on the spraying conditions, but examples of the conditions include adjusting the needle such that the coating liquid discharge rate is 30 to 60 mL/min, and setting the atomization pressure to 0.2 to 0.3 MPa. By spraying the coating liquid, the alcohol volatilizes before the coating liquid reaches the surface of the substrate, and the aggregation of the metal nanoparticles further progresses. In this way, independent nanoparticles that are not fully aggregated when the alcohol solution is left are forcibly aggregated. As a result, such free nanoparticles are prevented from filling the gaps between the aggregates, and the distance between the surfaces of the aggregates in the visible/infrared separation film can be set to 5 nm or more.

In the coating film formation step, a form in which the coating liquid is applied to the surface of the substrate by spraying the coating liquid has been described, but the present embodiment is not limited to this, and various liquid application methods such as a screen printing method and a spin coating method may also be used.

As described above, according to the visible/infrared separation film of the present embodiment, since the visible/infrared separation film is formed by the coating method, the visible/infrared separation film can be made large in area and the degree of freedom in the shape of the substrate can be increased.

In addition, according to the method for manufacturing an visible/infrared separation film of the present embodiment, it is possible to easily manufacture a visible/infrared separation film without using a thin film manufacturing technology such as a sputtering method.

In addition, the visible/infrared separation film of the present embodiment can achieve a visible light reflectance of 40% or more and an infrared light transmittance of 60% or more. Here, the reflectance of the visible light is the average value of the reflectance of light in the wavelength range of 380 to 750 nm. In addition, the transmittance of the infrared light is the average value of the transmittance of light in the wavelength range of 850 to 1600 nm.

In addition, since the visible/infrared separation film of the present embodiment is formed by the coating method as described above, the visible/infrared separation film can be made large in area and the degree of freedom in the shape of the substrate can be increased. Furthermore, it is possible to easily manufacture the visible/infrared separation film of the present embodiment without using a thin film manufacturing technology such as a sputtering method. In addition, unlike the dielectric multilayer film of the related art, there is no need to precisely overlap dozens of layers of films alternately, and thus it is possible to make the visible/infrared separation film easily and in a short time.

### Examples

Hereinafter, examples of the present invention will be described.

### (Example 1)

4 g of Disperbyk 2015 (non-volatile content 40%, acid value 10, manufactured by BYK Corporation) as a polymer dispersant was dissolved in 100 g of 2-propanol (isopropyl alcohol), and 25 g of silver oxide powder was suspended therein. The acid value of the nonvolatile content of this polymer dispersant was 25, and the content proportion of the polymer dispersant relative to the silver oxide was 6.4% by mass. Disperbyk 2015 has a styrene-maleic anhydride resin structure, and some of the maleic anhydride is modified with a polyalkylene glycol having a terminal hydroxyl group.

This suspension was then irradiated with ultrasonic waves of 20 KHz for 2 hours at room temperature of 15 to 17 °C. Next, the suspension was filtered through a 1 µm filter to obtain a brown dispersion of silver nanoparticles. Furthermore, this silver nanoparticle dispersion was left at room temperature of 15 to 17 °C for 6 months. When the dispersion was left, the dispersion was shielded from light. In this way, a coating liquid was prepared.

The silver nanoparticle dispersion prepared above was diluted with ethyl alcohol in a ratio of 1:3. An acrylic urethane primer paint was applied to a substrate composed of polymethyl methacrylate and then dried and cured to prepare a specimen. The diluted dispersion was sprayed and applied onto the specimen and dried at 80 °C for 30 minutes. The conditions for spray application of the silver dispersion were as follows: Anest Iwata LPH-101 was used as an air spray gun, the needle was adjusted such that the spray rate of the coating liquid was 30 to 60 mL/min, the atomization pressure was 0.2 to 0.3 MPa, and the application was performed only once. After that, an acrylic urethane clear painter was applied to protect the silver nanoparticles. In this manner, a visible/infrared separation film of Example 1 was manufactured.

### (Comparative Example 1)

The silver nanoparticle dispersion filtered through a 1 µm filter was diluted with ethyl alcohol in a ratio of 1:2 without being left. An acrylic urethane primer paint was applied to a substrate composed of polymethyl methacrylate and then dried and cured to prepare a specimen. The diluted dispersion was sprayed and applied onto the specimen and dried at 80 °C for 30 minutes. The conditions for spray application of the silver dispersion were as follows: Anest Iwata LPH-101 was used as an air spray gun, the needle was adjusted such that the spray rate of the coating liquid was 60 mL/min, the atomization pressure was 0.2 to 0.3 MPa, and the application was performed twice. In the subsequent stage, the same procedure as in Example 1 above was performed, and a visible/infrared separation film of Comparative Example 1 was manufactured.

### (Evaluation method)

The reflectance of the visible light and the transmittance of the infrared light were measured using a spectrophotometer UH4150 manufactured by Hitachi High-Tech Science or a spectrophotometer capable of measuring up to a near-infrared region. The specimen was cut out to a size that could be placed in the measuring device and then set in the device. The scanning speed was 300 nm/min in a visible region and 750 nm/min in an infrared region, and the visible/infrared inspection switching was set to a long wave of 850 nm. Measurements were performed at a sampling interval of 1 nm, with automatic detector switching and without using a light-reducing plate, the data was output as Excel, and the average values of the reflectance and the transmittance in a predetermined wavelength band were calculated and used as measurement values.

In addition, the major axis of the metal nanoparticle, the distance between the surfaces of the metal nanoparticles in the aggregate, the size of the aggregate, the distance between the surfaces of the aggregates, the film thickness, and the proportion of aggregates having an aspect ratio of 1 to 2 were measured using the methods described above.

The results are shown in Table 1.

**[Table 1]**

| | Example 1 | Comparative Example 1 |
|---|---|---|
| Thickness (nm) | 100 | 100 |
| Major axis of metal nanoparticle (nm) | 25 or less | 25 or less |
| Distance between surfaces of metal nanoparticles in aggregates (nm) | 2 | 2 |
| Distance between surfaces of aggregates (nm) | 5 or more | less than 3 |
| Size of aggregate (nm) | 50 or more | more than 50 |
| Proportion by number of aggregates having aspect ratio | 70% or more | 70% or more |
| of 1 to 2 (%) | | |
| Reflectance of visible light (%) | 46% | 41% |
| Transmittance of infrared light (%) | 60% | 43% |

As shown in Table 1, the visible/infrared separation film of Example 1 was within the scope of the present invention and had a visible light reflectance of 40% or more and an infrared light transmittance of 60% or more, and thus it was possible to reflect the visible light and to transmit the infrared light. On the other hand, in the visible/infrared separation film of Comparative Example 1, the surface distance between the aggregates was less than 3 nm, which did not satisfy the scope of the present invention. For this reason, the transmittance of infrared light was less than 60%, and infrared light could not be transmitted sufficiently.

### REFERENCE SIGNS LIST

1 ... Substrate, 2 ... Primary layer, 3 ... Visible/infrared separation film, 3A ... Metal Nanoparticle, 3B ... Aggregate, 4 ... Clear layer, 5 ... Visible/infrared separation member.

## Claims

1. A visible/infrared separation film comprising aggregates in each of which metal nanoparticles each having a major axis of 25 nm or less are aggregated,
wherein a distance between surfaces of the metal nanoparticles in the aggregate is 2 nm or less,
wherein a size of the aggregate is 50 nm or less,
wherein the aggregates are spaced apart from each other at intervals of 5 nm or more, and
wherein a film thickness is 120 nm or less.

2. The visible/infrared separation film according to claim 1, wherein a resin is included between the metal nanoparticles and between the aggregates.

3. The visible/infrared separation film according to claim 1 or 2, wherein, in the aggregates included in the visible/infrared separation film, aggregates having an aspect ratio (major axis/minor axis), which is a ratio of a major axis to a minor axis, in a range of 1 to 2 are 70% or more in a proportion by number.

4. The visible/infrared separation film according to claim 1 or 2, wherein the metal nanoparticles are composed of silver.

5. The visible/infrared separation film according to claim 1 or 2, wherein the metal nanoparticles are composed of indium.

6. A method for manufacturing a visible/infrared separation film, comprising:
a preparation step of dispersing at least one silver compound selected from silver oxide and silver carbonate and a polymer dispersant in an alcohol solvent, irradiating the alcohol solvent with ultrasonic waves to disperse the silver compound, and then leaving the alcohol solvent in a dark place to prepare a coating liquid; and
a coating film formation step of coating a surface of a substrate with the coating liquid obtained in the preparation step.

7. The method for manufacturing a visible/infrared separation film according to claim 6, wherein a concentration of the silver compound in the alcohol solvent is 5% to 40% by mass.

8. The method for manufacturing a visible/infrared separation film according to claim 6, wherein the alcohol solvent is at least one selected from the group consisting of methanol, ethanol, 1-propanol, 2-propanol, 1-butanol, 2-methyl-1-propanol, and 1-methoxy-2-propanol.

9. The method for manufacturing a visible/infrared separation film according to claim 6, wherein the polymer dispersant has an acid value of 150 or less.

10. The method for manufacturing a visible/infrared separation film according to claim 9, wherein the polymer dispersant has a styrene-maleic anhydride resin structure, and some of the maleic anhydride is modified with a polyalkylene glycol having a terminal hydroxyl group or a polyalkylene glycol having a terminal amino group.

11. The method for manufacturing a visible/infrared separation film according to claim 6, wherein an amount of the polymer dispersant added to the silver compound is 2% to 25% in term of mass percentage of a nonvolatile content.
